# EUROPÄISCHE PATENTSCHRIFT

(11) **EP 2 411 255 B1**
(45) Veröffentlichungstag und Bekanntmachung des Hinweises auf die Patenterteilung: **02.05.2018**
(21) Anmeldenummer: 10709415.3
(22) Anmeldetag: 11.03.2010
(51) Int. Cl.: B61C 9/14, B61L 3/00, B61L 25/02

(54) **VERFAHREN ZUR STEUERUNG EINES SCHIENENFAHRZEUGS**
METHOD FOR CONTROLLING A RAILWAY VEHICLE
PROCÉDÉ DE COMMANDE D'UN VÉHICULE FERROVIAIRE

(30) Priorität: 24.03.2009 DE 102009014591
(43) Veröffentlichungstag der Anmeldung: 01.02.2012
(73) Patentinhaber: MTU FRIEDRICHSHAFEN GMBH, 88045 Friedrichshafen (DE)
(72) Erfinder: BOTTLANG, Holger, 78315 Radolfszell (DE); LEHMANN, Ingo, 88696 Owingen (DE); WILLMANN, Michael, 88697 Bermatingen (DE)
(74) Vertreter: Eisenführ Speiser
(86) Internationale Anmeldenummer: PCT/EP2010/001510
(87) Internationale Veröffentlichungsnummer: WO 2010/108595

(56) Entgegenhaltungen:
- DD-A1- 255 132
- DE-A1- 1 455 052
- DE-A1-102007 047 178
- US-A1- 2006 138 285

## Beschreibung

Die Erfindung betrifft ein Verfahren zur Steuerung eines Schienenfahrzeugs mit einer Doppelantriebsanlage, wobei jede Antriebsanlage eine Brennkraftmaschine sowie eine Übersetzungseinheit umfasst, bei dem an Hand einer Soll-Ist-Abweichung des Antriebsmoments und einer Prädiktionsantriebsart über einen Traktionsmanager eine Soll-Antriebsart im Sinne eines Einfach- oder Doppelantriebs, ein Soll-Betriebspunkt sowie eine Soll-Übersetzungsstufe für die Übersetzungseinheiten festgelegt werden (s. zum Beispiel die DE 10 2007 047 178 A1, dem Oberbegriff entsprechend). Bei einem Schienenfahrzeug mit einer Doppelantriebsanlage wird das Soll-Antriebsmoment über einen Fahrhebel vorgeben, welches dann von einem Zugsteuergerät als Vorgabewert für die Brennkraftmaschinen auf einem Datenbus, zum Beispiel CAN-Bus, gesetzt wird. Auf Grund der parallelen Ansteuerung ist gewährleistet, dass jede Brennkraftmaschine im Rahmen der üblichen Toleranzen die annähernd gleiche Antriebsleistung erzeugt. Üblicherweise werden bei einer Doppelantriebsanlage die Brennkraftmaschinen für eine maximale Beschleunigung des Schienenfahrzeugs ausgelegt. Während des Beschleunigungsvorgangs werden die Brennkraftmaschinen an der Volllastkurve des Motorkennfelds betrieben. Nach Erreichen der maximal zulässigen Fahrzeuggeschwindigkeit ist nur noch diejenige Antriebsleistung erforderlich, welche zur Beibehaltung des Beharrungszustands notwendig ist. Im Beharrungszustand liegen daher die Betriebspunkte der Brennkraftmaschinen im Motorkennfeld in einem Bereich mit deutlich höherem spezifischen Kraftstoffverbrauchs. Problematisch ist insofern, dass sich trotz der geringeren Leistungsabgabe ein höherer Kraftstoffverbrauch einstellt.

Ein Maßnahme zur Verbesserung ist aus der DE 1 455 052 A1 bekannt, welche eine Doppelantriebsanlage und ein Steuerungsverfahren für ein Schienenfahrzeug zeigt. Die Doppelantriebsanlage besteht aus einem Haupt- und einem Hilfsdieselmotor, einem Getriebe, einem Generator, einem elektrischen Regler sowie einem Elektromotor. Der Hauptdieselmotor treibt den Generator an, welcher wiederum über eine Welle mit dem Getriebe verbunden ist. Der Hilfsdieselmotor ist ebenfalls mit dem Getriebe verbunden. An einer Abtriebswelle des Getriebes ist der Elektromotor als zusätzlicher Antrieb angeordnet. Über den Generator, den elektrischen Regler und den Elektromotor ist ein dieselelektrischer Antriebspfad dargestellt. In einem ersten Betriebszustand, welcher dem Stillstand des Schienenfahrzeugs entspricht, ist der Hauptdieselmotor aktiviert, während der Hilfsdieselmotor und das Getriebe deaktiviert sind. Der vom Generator erzeugte Strom wird ausschließlich zum Vorheizen des Zuges und zur Versorgung weiterer Stromverbraucher verwendet. In einem zweiten Betriebszustand, welcher einem niedrigen Fahrleistungsbedarf entspricht, ist der Hauptdieselmotor und das Getriebe aktiviert, während der Hilfsdieselmotor weiterhin deaktiviert ist. Der Hauptdieselmotor treibt in seinem unteren und mittleren Drehzahlbereich über das Getriebe die Triebradsätze an. Zur Verbesserung des Motorwirkungsgrads wird ein Teil der Motorleistung parallel über die elektrische Triebverbindung -nämlich über den Generator, den Regler und den Elektromotor- auf die Triebradsätze übertragen. In einem dritten Betriebszustand, welcher einem hohen Leistungsbedarf entspricht, sind der Hauptdieselmotor und der Hilfsdieselmotor die gemeinsame Antriebsquelle im oberen Drehzahlbereich bis zur Maximaldrehzahl. Auch hier wird wiederum ein Teil der Motorleistung des Hauptdieselmotors auf elektrischem Wege auf die Triebradsätze übertragen, um den Hauptdieselmotor im Bereich des günstigen Kraftstoffverbrauchs arbeiten zu lassen.

Eine andere Maßnahme ist aus der DE 814 604 C bekannt, welche ein Doppelantriebsanlage mit zwei identischen Antriebssträngen zeigt. Jede Antriebsanlage umfasst einen Dieselmotor und ein Übertragungssystem in Form eines Generators und elektrischer Achsmotoren zum Antreiben der Radsätze. Beide Generatoren sind ausgangsseitig über Kupplungen mechanisch mit einem Reduziergetriebe verbunden, welches wiederum die Hilfsmaschinen antreibt. Hilfsmaschinen sind zum Beispiel die Lüfter für die Kühler, Bremskompressoren und die Generatoren zur Erzeugung der Bordnetzspannung. Kennzeichnendes Merkmal ist, dass die für den Betrieb unerlässlichen Hilfsmaschinen wahlweise mit dem einen oder anderen auf konstante Gesamtleistung einstellbaren Motor kuppelbar sind, wodurch die für den Antrieb des Schienenfahrzeugs vorgesehene Brennkraftmaschine im Bereich des günstigen Kraftstoffverbrauchs betrieben wird, während die andere Brennkraftmaschine die Hilfsmaschinen antreibt.

Beide aufgezeigten Maßnahmen bewirken zwar einen reduzierten Kraftstoffverbrauch, wobei jedoch noch nicht alle Möglichkeiten zur Kraftstoffeinsparung ausgeschöpft sind. Der Erfindung liegt daher die Aufgabe zu Grunde, ein Verfahren zur Steuerung eines Schienenfahrzeugs mit Doppelantriebsanlage zu entwerfen, welches eine weitere Kraftstoffeinsparung gestattet.

Die Erfindung löst diese Aufgabe durch ein Verfahren mit den Merkmalen des Anspruchs 1. Die Ausgestaltungen sind in den Unteransprüchen dargestellt.

Das Verfahren zur Steuerung der Doppelantriebsanlage besteht darin aus einem Soll-Antriebsmoment, welches als Leistungswunsch über den Fahrhebel vorgegeben wird, und einem Ist-Antriebsmoment des Schienenfahrzeugs zunächst eine Antriebsmomentabweichung zu berechnen. Anschließend werden an Hand der Antriebsmomentabweichung und einer Prädiktionsantriebsart über einen Traktionsmanager eine Soll-Antriebsart im Sinne eines Einfach- oder Doppelantriebs, ein Soll-Betriebspunkt für die jeweilige Brennkraftmaschine sowie eine Soll-Übersetzungsstufe für die Übersetzungseinheiten festgelegt. Unter Übersetzungseinheiten ist im Sinne der Erfindung eine Generator-Elektromotoreinheit als dieselelektrischer Antrieb, ein automatisiertes Lastschaltgetriebe oder ein hydrodynamische Strömungsgetriebe zu verstehen. Zentraler Gedanke der Erfindung ist, dass im Beharrungszustand die zum Vortrieb vorgesehene Brennkraftmaschine auf einen Betriebspunkt nahe der Volllastkurve eingestellt wird und die andere Brennkraftmaschine auf einen Betriebspunkt nahe der Leerlaufdrehzahl eingestellt wird, wobei die Berücksichtigung der Prädiktionsantriebsart wesentlich zur Kraftstoffeinsparung beiträgt. Für den Betreiber verringern sich daher die Betriebskosten.

Bestimmt wird die Prädiktionsantriebsart vor Fahrantritt, indem der elektronische Streckenfahrplan in das Zugsteuergerät eingelesen wird und die streckenabschnittsbezogenen Prädiktionsantriebsarten des Schienenfahrzeugs im Voraus festgelegt werden. Im Fahrbetrieb wird dann die Prädiktionsantriebsart festgelegt, indem eine Positionsabweichung der Ist-Position zu einer aus dem elektronischen Streckenfahrplan ermittelten Soll-Position des Schienenfahrzeugs bestimmt wird, an Hand der Positionsabweichung eine Zeitreserve berechnet wird und in Abhängigkeit der Zeitreserve die Behaltung oder ein Wechsel der Prädiktionsantriebsart vorgeschlagen wird. So wird beispielsweise bei einer negativen Zeitreserve im Sinne einer Verspätung eine Prädiktionsantriebsart höherer Leistungsabgabe vorgeschlagen.

In einer Ausgestaltung der Erfindung ist vorgesehen, dass bei der Festlegung der Soll-Antriebsart und des Soll-Betriebspunkts ein über den Betriebszeitraum erfasstes Lastkollektiv maßgeblich berücksichtigt wird. Für das Lastkollektiv wird beispielsweise das Ist-Antriebsmoment oder die Motordrehzahl des Soll-Betriebspunkts von einem Lastprofilrekorder aufgezeichnet. Über das Lastkollektiv wird folglich eine gleichmäßige Belastung der Brennkraftmaschinen erreicht, woraus wiederum sich gleiche Wartungsintervalle ergeben. Bei der Festlegung der Soll-Antriebsart werden ebenfalls der Füllstand der Motorbetriebsstoffe, zum Beispiel Kraftstoff, Kühlmittel, Öl und SCR-Flüssigkeit, berücksichtigt.

In den Figuren ist ein bevorzugtes Ausführungsbeispiel dargestellt. Es zeigen:
- Figur 1: ein Systemschaubild,
- Figur 2: den Traktionsmanager als Blockschaltbild,
- Figur 3: ein Motorkennfeld,
- Figur 4: einen Programm-Ablaufplan und
- Figur 5: ein Unterprogramm UP1.

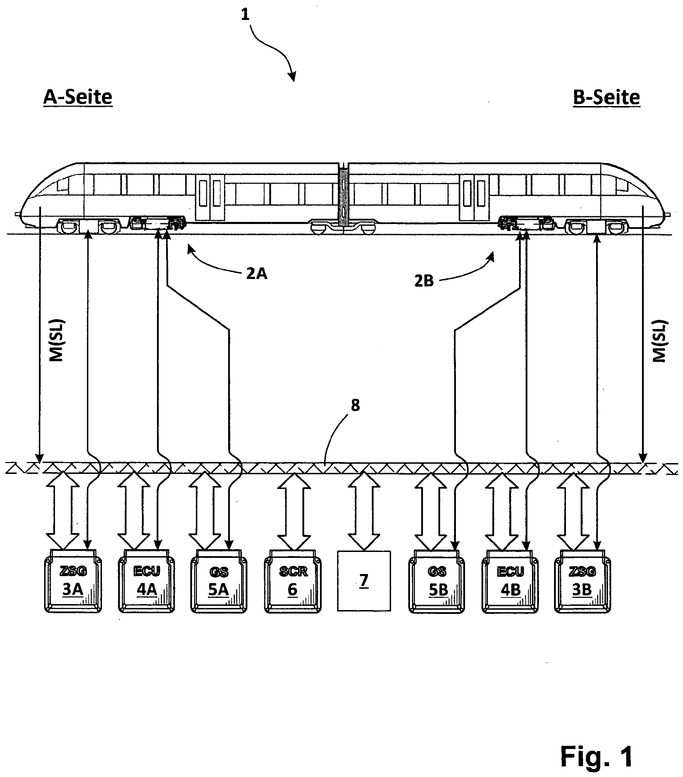

Die Figur 1 zeigt ein Systemschaubild eines Schienenfahrzeugs 1, hier: eines Triebwagens, mit einer Doppelantriebsanlage. Die Erfindung kann jedoch auch bei mehr als zwei Antriebsanlagen zum Einsatz kommen. Das Schienenfahrzeug 1 hat eine A-Seite und eine B-Seite. Dementsprechend sind in der Zeichnung und im Text die Komponenten auf der A-Seite mit dem Zusatz A gekennzeichnet und die Komponenten auf der B-Seite mit dem Zusatz B. Jede Antriebsanlage, beispielsweise die Antriebsanlage 2A, besteht aus einer Brennkraftmaschine und einer Übersetzungseinheit zur Momentübertragung von der Brennkraftmaschine auf die Triebräder. Unter Übersetzungseinheit ist im Sinne der Erfindung eine Generator-Elektromotoreinheit für einen dieselelektrischen Antrieb, ein automatisiertes Lastschaltgetriebe oder ein hydrodynamisches Strömungsgetriebe zu verstehen. Die Antriebsanlagen 2A und 2B sind mit Brennkraftmaschinen gleicher Leistungsabgabe symmetrisch und identisch aufgebaut.

An einem gemeinsamen elektronischen Datenbus 8, beispielsweise einem CAN-Bussystem oder Ethernet, sind die elektronischen Steuergeräte angeschlossen. Für den A-seitigen Schienenfahrzeugteil sind dies ein Zugsteuergerät 3A (ZSG), ein Motorsteuergerät 4A (ECU) und ein Getriebesteuergerät 5A (GS). Zusätzlich ist ein Steuergerät 6 (SCR) zur Festlegung des Abgases angeschlossen. Die am Datenbus 8 angeschlossenen Steuergeräte 3 bis 6 sind sowohl Empfänger als auch Sender. Ebenfalls am Datenbus 8 angeschlossen ist eine Empfangseinheit 7 zum Empfang des Bahnrichtfunks und der Daten des GPS. Über den Bahnrichtfunk wird der elektronische Streckenfahrplan mit hinterlegter elektronischer Streckenkarte auf dem Datenbus 8 gesetzt. Die Daten des GPS umfassen die Ist-Position und die aktuelle Höhe. Die Sollwert-Vorgabe des Soll-Antriebsmoments M(SL) erfolgt vom Triebwagenführer über einen Fahrhebel. Die Empfangseinheit 7 und der Fahrhebel zur Vorgabe des Soll-Antriebsmoments M(SL) sind ausschließlich Sender auf dem Datenbus 8.

Die Rahmenbedingungen beim Betrieb eines Schienenfahrzeugs werden durch den elektronischen Streckenfahrplan vorgegeben, welcher - wie bekannt - vor Fahrtantritt über Richtfunk in das Zugsteuergerät eingelesen wird. Im elektronischen Streckenfahrplan sind die streckenabschnittsbezogenen Geschwindigkeiten und damit auch der Zeitrahmen zwischen zwei Wegpunkten hinterlegt. Vor Fahrtantritt werden die streckenabschnittsbezogenen Antriebsarten des Schienenfahrzeugs mittels des elektronischen Streckenfahrplans prädiktiv festgelegt. Im weiteren Text werden diese als Prädiktionsantriebsart bezeichnet. Im Fahrbetrieb wird dann eine Positionsabweichung der Ist-Position zu einer aus dem elektronischen Streckenfahrplan ermittelten Soll-Position des Schienenfahrzeugs bestimmt. Aus der Positionsabweichung wiederum wird eine Zeitreserve berechnet. An Hand der Zeitreserve wird dann entweder die Beibehaltung der Prädiktionsantriebsart, also der aktuellen Antriebsleistung, oder der Wechsel der Prädiktionsantriebsart, also zu einer höheren/niedrigeren Antriebsleistung, vorgeschlagen. In einem weiteren Schritt sieht die Erfindung nun vor, dass eine Soll-Ist-Abweichung des Antriebsmoments berechnet wird und in Abhängigkeit dieser Antriebsmomentabweichung sowie der Prädiktionsantriebsart über einen Traktionsmanager eine Soll-Antriebsart im Sinne eines Einfach- oder Doppelantriebs, ein Soll-Betriebspunkt für die Brennkraftmaschinen sowie eine Soll-Übersetzungsstufe für die Übersetzungseinheiten festgelegt werden.

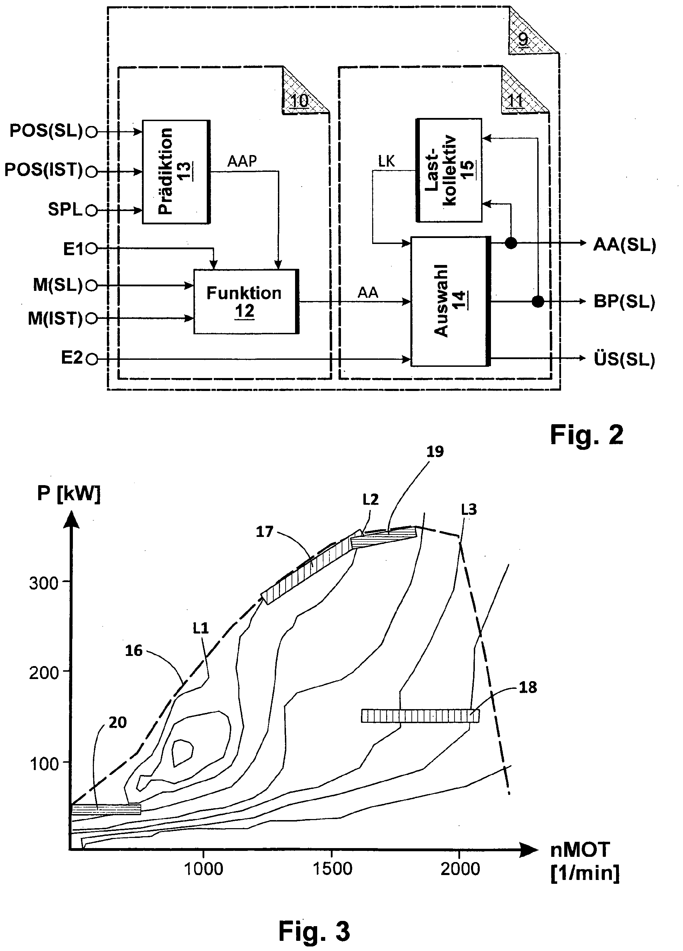

In der Figur 2 ist der Traktionsmanager 9 als Blockschaltbild dargestellt, wobei die einzelnen Blöcke Teile eines ausführbaren Programms darstellen. Die Eingangsgrößen sind das Soll-Antriebsmoment M(SL), das Ist-Antriebsmoment M(IST), die Soll-Position POS(SL), die Ist-Position POS(IST), der elektronische Streckenfahrplan SPL, eine erste Eingangsgröße E1 und eine zweite Eingangsgröße E2. Die Ausgangsgrößen sind eine Soll-Antriebsart AA(SL), ein Soll-Betriebspunkt BP(SL) für die Brennkraftmaschinen und eine Soll-Übersetzungsstufe ÜS(SL) für Übertragungseinheiten, beispielsweise ein automatisiertes Lastschaltgetriebe. Die Ansteuersignale werden auf dem Datenbus gesetzt und vom zutreffenden Steuergerät in die entsprechenden Stellsignale umgesetzt. Beispielsweise bei einer Brennkraftmaschine mit einem Common-Railsystem sind dies ein PWM-Signal zur Ansteuerung der Saugdrossel und das Ansteuersignal für die Injektoren (Spritzbeginn/Spritzende). Innerhalb des Traktionsmanagers 9 sind als funktionelle Einheiten eine Betriebsstrategie 10 und eine Verifikation 11 enthalten. Die Betriebsstrategie 10 wiederum enthält einen Funktionsblock 12 und eine Prädiktion 13. Die Verifikation 11 umfasst eine Auswahl 14 und ein Lastkollektiv 15.

Innerhalb der Betriebsstrategie 10 bestimmt die Prädiktion 13 vor Fahrtantritt die streckenabschnittsbezogenen Prädiktionsantriebsarten AAP Hand des elektronischen Streckenfahrplans SPL. Im Fahrbetrieb wird dann über die Prädiktion 13 die Prädiktionsantriebsart AAP in Abhängigkeit einer Positionsabweichung der Ist-Position POS(IST) zur aus dem elektronischen Streckenfahrplan SPL ermittelten Soll-Position POS(SL) des Schienenfahrzeugs berechnet. Im Funktionsblock 12 wird aus dem Soll-Antriebsmoment M(SL) und dem Ist-Antriebsmoment M(IST) eine Antriebsmomentabweichung berechnet. Danach wird an Hand der empfohlenen Prädiktionsantriebsart AAP, welche die empfohlene Antriebsleistung kennzeichnet, und der Antriebsmomentabweichung eine Antriebsart AA bestimmt. Ergänzend wird die erste Eingangsgröße E1 mit berücksichtigt, welche den Zustand des Gesamtsystems kennzeichnet. Innerhalb der Verifikation 11 bestimmt die Auswahl 14 an Hand der Antriebsart AA, eines Lastkollektivs LK und der zweiten Eingangsgröße E2 die Soll-Antriebsart AA(SL) im Sinne eines Einfach- oder Doppelantriebs, den Soll-Betriebspunkt BP(SL) für die A-seitige und B-seitige Brennkraftmaschine sowie die Soll-Übersetzungsstufe ÜS(SL) für die Übersetzungseinheiten. Über das Lastkollektiv 14 werden die Soll-Antriebsart AA(SL) und der Soll-Betriebspunkt BP(SL) in einem Lastprofilrekorder aufgezeichnet. Über das Lastprofil 14 wird erreicht, dass bei der Verifikation der Soll-Größen die Antriebsanlagen über den Betriebszeitraum gleichmäßig ausgelastet werden. Unter der Eingangsgröße E2 sind der Füllstand eines SCR-Tanks und der Kraftstoffvorrat zusammengefasst.

Während der Beschleunigungsphase des Schienenfahrzeugs gibt der Traktionsmanager 9 als Soll-Antriebsart AA(SL) einen Doppelantrieb und als Soll-Betriebspunkt BP(SL) einen Wert auf der Volllastkurve aus. Bei Verwendung eines automatisierten Lastschaltgetriebes gibt der Traktionsmanager 9 als Soll-Übersetzungsstufe ÜS(SL) den Wert AUTO vor, das heißt, das elektronische Getriebesteuergerät (Fig. 1: 5A, 5B) bestimmt die Übersetzungsstufe selbsttätig, zum Beispiel in Abhängigkeit der Getriebeausgangsdrehzahl. Bei Verwendung eines hydrodynamischen Strömungsgetriebes gibt der Traktionsmanager 9 einen Gang vor. Im Beharrungszustand des Schienenfahrzeugs, also bei einer konstanten Geschwindigkeit, gibt der Traktionsmanager 9 als Soll-Antriebsart AA(SL) einen Einfachantrieb vor. Als Soll-Betriebspunkt BP(SL) wird beispielsweise für die A-seitige Brennkraftmaschine ein Wert auf der Volllastkurve vorgegeben, während als Soll-Betriebspunkt für B-seitige Brennkraftmaschine entweder der Leerlauf oder eine Deaktivierung gesetzt wird. Bei Verwendung eines automatisierten Lastschaltgetriebes gibt der Traktionsmanager 9 als Soll-Übersetzungsstufe ÜS(SL) für das A-seitige Lastschaltgetriebe den Wert AUTO und für das B-seitige Lastschaltgetriebe Neutral vor. Beim Bremsvorgang des Schienenfahrzeugs gibt der Traktionsmanager 9 als Soll-Antriebsart AA(SL) einen Doppelantrieb und als Soll-Betriebspunkt BP(SL) einen Festwert aus. Bei Verwendung eines automatisierten Lastschaltgetriebes gibt der Traktionsmanager 9 als Soll-Übersetzungsstufe den Wert AUTO vor. Im Bahnhof gibt der Traktionsmanager 9 als Soll-Antriebsart AA(SL) einen Einfachantrieb vor. Dementsprechend ist dann der Soll-Betriebspunkt BP(SL) für die zum Beispiel A-seitige Brennkraftmaschine der Leerlauf, während die B-seitige Brennkraftmaschine deaktiviert wird. Bei Verwendung eines automatisierten Lastschaltgetriebes gibt der Traktionsmanager 9 als Soll-Übersetzungsstufe ÜS(SL) den Wert AUTO vor. Bei Verwendung eines hydrodynamischen Strömungsgetriebes gibt der Traktionsmanager 9 den Wert Null vor.

Die Figur 3 zeigt ein Motorkennfeld, bei dem auf der Abszisse die Motordrehzahl nMOT und auf der Ordinate die abgegebene Motorleistung P aufgetragen ist. Innerhalb des Kennfelds sind Linien gleichen spezifischen Kraftstoffverbrauchs dargestellt. So zeigt die Linie L1 zum Beispiel einen spezifischen Kraftstoffverbrauch von 190 g/kWh, die Linie L2 einen spezifischen Kraftstoffverbrauch von 200 g/kWh und die Linie L3 einen spezifischen Kraftstoffverbrauch von 230 g/kWh. Mit dem Bezugszeichen 16 ist als gestrichelte Linie die Volllastkurve gekennzeichnet. Zur maximalen Beschleunigung des Schienenfahrzeugs werden die Brennkraftmaschinen an der Volllastkurve 16 des Motorkennfelds betrieben, das heißt, deren Soll-Betriebspunkte liegen nahe der Volllastkurve 16. Exemplarisch ist dies mit dem Beschleunigungsbereich 17 dargestellt. Nach Erreichen der maximal zulässigen Fahrzeuggeschwindigkeit, zum Beispiel 120 km/h, ist eine wesentliche geringere Antriebsleistung zur Beibehaltung des Beharrungszustands erforderlich. Im Motorkennfeld werden daher die beiden Brennkraftmaschinen in einem Beharrungsbereich 18 betrieben. Der Beharrungsbereich 18 liegt jedoch auf der Linie L3, welche einen höheren spezifischen Kraftstoffverbrauch als die Linie L2 kennzeichnet. Kurz: die Soll-Betriebspunkte der Brennkraftmaschinen liegen im Motorkennfeld in einem Bereich mit deutlich höherem spezifischen Kraftstoffverbrauchs. Die Erfindung sieht nun vor, dass bei Beharrung über den Traktionsmanager beispielsweise die A-seitige Brennkraftmaschine bei einem Betriebspunkt im Volllastbereich 19 an der Volllastkurve 16 betreiben wird, während hingegen die B-seitige Brennkraftmaschine bei einem Betriebspunkt im Leerlaufbereich 20 betrieben wird.

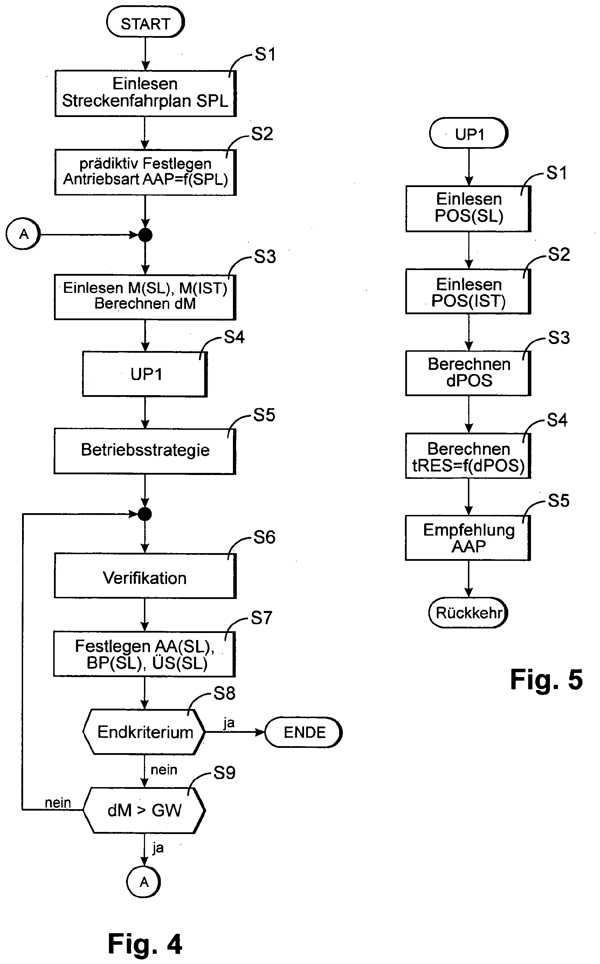

In der Figur 4 ist ein Programm-Ablaufplan dargestellt. Bei S1 wird der elektronische Streckenfahrplan SPL mit der hinterlegten Streckenkarte über den Bahnrichtfunk eingelesen und im Zugsteuergerät abgelegt. Vor Fahrtantritt werden bei S2 die streckenabschnittsbezogenen Prädiktionsantriebsarten AAP in Abhängigkeit des Streckenfahrplans SPL im Voraus bestimmt und gespeichert. Bei S3 werden dann das Soll-Antriebsmoment M(SL) sowie das Ist-Antriebsmoment M(IST) eingelesen und anschließend die Antriebsmomentabweichung dM berechnet. Bei S4 wird in einem Unterprogramm UP1 zur Bestimmung der Prädiktionsantriebsart AAP während des Betriebs des Schienenfahrzeugs verzweigt. Das Unterprogramm UP1 ist in der Figur 5 dargestellt und wird in Verbindung mit dieser erläutert. Nach Rückkehr aus dem Unterprogramm UP1 wird bei S5 über die Betriebstrategie (Figur 2: 10) eine Antriebsart festgelegt, welche dann bei S6 über die Verifikation (Figur 2: 11) bewertet wird. Bei S7 werden dann die Soll-Antriebsart AA(SL) im Sinne eines Einfach- oder Doppelantriebs, ein Soll-Betriebspunkt BP(SL) sowie eine Soll-Übersetzungsstufe ÜS(SL) für die Übersetzungseinheiten festgelegt und auf dem Datenbus gesetzt. Im Anschluss wird bei S8 geprüft, ob ein Endkriterium vorliegt. Ist dies der Fall, Abfrageergebnis S8: ja, wird der Programmablauf beendet. Wurde kein Endkriterium erkannt, Abfrageergebnis S8: nein, wird bei S9 die Antriebsmomentabweichung dM mit einem Grenzwert GW verglichen. Unterscheiden sich das Soll-Antriebsmoment M(SL) und das Ist-Antriebsmoment M(IST) nur geringfügig, Abfrageergebnis S9: nein, verzweigt der Programmablauf zurück zu S6. Ist die Antriebsmomentabweichung dM größer als der Grenzwert GW, Abfrageergebnis S9: ja, so verzweigt der Programmablauf zurück zu S3.

In der Figur 5 ist das Unterprogramm UP1 dargestellt, über welches die Prädiktionsantriebsart AAP als Empfehlung berechnet wird. Bei S1 wird die Soll-Position POS(SL) des Schienenfahrzeugs an Hand der Streckenfahrplans und der Zeit bestimmt, Danach wird bei S2 die Ist-Position POS(IST) über das GPS-System eingelesen und anschließend bei S3 eine Positionsabweichung dPOS bestimmt. Aus der Positionsabweichung dPOS wiederum wird bei S4 eine Zeitreserve tRES berechnet, bei S5 bewertet und eine Prädiktionsantriebsart AAP empfohlen. Die Zeitreserve zeigt an, ob das Schienenfahrzeug rechtzeitig, zu früh oder zu spät den nächsten Wegpunkt erreicht. Liegt die Zeitreserve tRES innerhalb eines Toleranzbands, so wird das Beibehalten der Prädiktionsantriebsart AAP empfohlen. Liegt die Zeitreserve tRES außerhalb des Toleranzbands und ist negativ im Sinne einer Verspätung, so wird eine Prädiktionsantriebsart AAP mit höherer Leistungsabgabe empfohlen. Liegt die Zeitreserve tRES außerhalb des Toleranzbands TB und ist positiv im Sinne eines verfrühten Ankommens, so wird eine Prädiktionsantriebsart AAP mit niedrigstem Energieverbrauch empfohlen. Danach wird in den Programm-Ablaufplan der Figur 4 zurückgekehrt (S4).

Die Erfindung bietet insgesamt den Vorteil eines nochmals reduzierten Kraftstoffverbrauchs, indem der Traktionsmanager in Verbindung mit der Prädiktion unter Nutzung des elektronischen Streckenfahrplans und des Höhenprofils eine vorausschauende Antriebsart gestattet. Für den Betreiber verringern sich daher die Betriebskosten.

### Bezugszeichen

- 1: Schienenfahrzeug
- 2A, 2B: Antriebsanlage
- 3A, 3B: Zugsteuergerät
- 4A, 4B: Motorsteuergerät
- 5A, 5B: Getriebesteuergerät
- 6: SCR-Steuergerät
- 7: Empfangseinheit
- 8: Datenbus
- 9: Traktionsmanager
- 10: Betriebsstrategie
- 11: Verifikation
- 12: Funktionsblock
- 13: Prädiktion
- 14: Auswahl
- 15: Lastkollektiv
- 16: Volllastkurve
- 17: Beschleunigungsbereich
- 18: Beharrungsbereich
- 19: Volllastbereich
- 20: Leerlaufbereich

## Patentansprüche

1. Verfahren zur Steuerung eines Schienenfahrzeugs (1) mit einer Doppelantriebsanlage, wobei jede Antriebsanlage eine Brennkraftmaschine sowie eine Übersetzungseinheit umfasst, bei dem ein Soll-Antriebsmoment (M(SL)) als Leistungswunsch über einen Fahrhebel vorgegeben wird, bei dem ein Ist-Antriebsmoment (M(IST)) des Schienenfahrzeugs (1) bestimmt wird, eine Antriebsmomentabweichung (dM) aus Soll-Antriebsmoment (M(SL)) zum Ist-Antriebsmoment (M(IST)) berechnet wird, bei dem eine Prädiktionsantriebsart (AAP) bestimmt wird und in Abhängigkeit der Antriebsmomentabweichung (dM) sowie der Prädiktionsantriebsart (AAP) über einen Traktionsmanager (9) eine Soll-Antriebsart (AA(SL)) im Sinne eines Einfach- oder Doppelantriebs, ein Soll-Betriebspunkt (BP(SL)) sowie eine Soll-Übersetzungsstufe (ÜS(SL)) für die Übersetzungseinheiten festgelegt werden, **dadurch gekennzeichnet, dass** im Beharrungszustand die zum Vortrieb vorgesehene Brennkraftmaschine auf einen Betriebspunkt nahe der Volllastkurve eingestellt wird und die andere Brennkraftmaschine auf einen Betriebspunkt nahe der Leerlaufdrehzahl eingestellt wird.

2. Verfahren nach Anspruch 1,
**dadurch gekennzeichnet,**
**dass** ein Lastkollektiv (15) der Brennkraftmaschinen aufgezeichnet wird und das Lastkollektiv (15) maßgeblich bei der Festlegung der Soll-Antriebsart (AA(SL)) und des Soll-Betriebspunkts (BP(SL)) berücksichtigt wird.

3. Verfahren nach Anspruch 2,
**dadurch gekennzeichnet,**
**dass** bei der Festlegung der Soll-Antriebsart (AA(SL)) der Füllstand der Motorbetriebsstoffe berücksichtigt wird.

4. Verfahren nach einem der vorausgegangenen Ansprüche,
**dadurch gekennzeichnet,**
**dass** die Prädiktionsantriebsart (AAP) bestimmt wird, indem ein elektronischer Streckenfahrplan (SPL) als streckenabschnittsbezogene Geschwindigkeiten über ein Zugsteuergerät (3A, 3B) eingelesen wird, vor Fahrtantritt streckenabschnittsbezogene Prädiktionsantriebsarten (AAP) des Schienenfahrzeugs (1) mittels des elektronischen Streckenfahrplans (SPL) im voraus bestimmt werden, im Fahrbetrieb eine Positionsabweichung (dPOS) der Ist-Position (POS(IST)) zu einer aus dem elektronischen Streckenfahrplan ermittelten Soll-Position (POS(SL)) des Schienenfahrzeugs (1) bestimmt wird, an Hand der Positionsabweichung (dPOS) eine Zeitreserve (tRES) berechnet wird und in Abhängigkeit der Zeitreserve (tRES) die Behaltung der Prädiktionsantriebsart (AAP) oder ein Wechsel der Prädiktionsantriebsart (AAP) vorgeschlagen wird.

5. Verfahren nach Anspruch 4,
**dadurch gekennzeichnet,**
**dass** bei einer negativen Zeitreserve (tRES) im Sinne einer Verspätung eine Prädiktionsantriebsart (AAP) höherer Leistungsabgabe vorgeschlagen wird, bei einer Zeitreserve (tRES) innerhalb eines Toleranzbands eine Beibehaltung der aktuellen Prädiktionsantriebsart (AAP) vorgeschlagen wird und bei einer positiven Zeitreserve (tRES) im Sinne eines verfrühten Ankommens eine Prädiktionsantriebsart (AAP) mit niedrigstem Energieverbrauch vorgeschlagen wird.

## Claims

1. Method for controlling a railway vehicle (1) having a double drive system, each drive system comprising an internal combustion engine and a transmission unit, in which a target drive torque (M(SL)) is predefined as a desired power via a drive lever, in which an actual drive torque (M(IST)) of the railway vehicle (1) is determined, a drive torque deviation (dM) is calculated from target drive torque (M(SL)) relative to actual drive torque (M(IST)), in which a prediction drive type (AAP) is determined and, depending on the drive torque deviation (dM) and the prediction drive type (AAP), a target drive type (AA(SL)) in the sense of a single or double drive, a target operating point (BP(SL)) and a target transmission stage (US(SL)) of the transmission units are defined by a traction manager (9),
**characterized in that**
in the steady state, the internal combustion engine provided for the forward drive is set to an operating point close to the full-load curve, and the other internal combustion engine is set to an operating point close to the idling speed.

2. Method according to Claim 1,
**characterized in that**
a load spectrum (15) of the internal combustion engines is recorded, and the load spectrum (15) is taken into account decisively when defining the target drive type (AA(SL)) and the target operating point (BP(SL)).

3. Method according to Claim 2,
**characterized in that**
the level of the engine operating materials is taken into account when defining the target drive type (AA(SL)).

4. Method according to one of the preceding claims,
**characterized in that**
the prediction drive type (AAP) is determined **in that** an electronic timetable (SPL) is read in as section-based speeds via a train control device (3A, 3B), before the start of travel, section-based prediction drive types (AAP) of the railway vehicle (1) are determined in advance by means of the electronic timetable (SPL), in driving operation a positioning deviation (dPOS) of the actual position (POS(IST)) relative to a target position (POS(SL)) of the railway vehicle (1), determined from the electronic timetable, is determined, a time allowance (tRES) is determined by using the position deviation (dPOS) and, depending on the time allowance (tRES), maintaining the prediction drive type (AAP) or changing the prediction drive type (AAP) is proposed.

5. Method according to Claim 4,
**characterized in that**
in the event of a negative time allowance (tRES) in the sense of a late arrival, a prediction drive type (AAP) with a higher power output is proposed, in the event of a time allowance (tRES) within a tolerance band, maintaining the current prediction drive type (AAP) is proposed, and in the event of a positive time allowance (tRES) in the sense of an early arrival, a prediction drive type (AAP) with the lowest energy consumption is proposed.

## Revendications

1. Procédé de commande d'un véhicule ferroviaire (1) avec un système d'entraînement double, dans lequel chaque système d'entraînement comprend un moteur à combustion interne ainsi qu'une unité de réduction, dans lequel on prédétermine un couple d'entraînement de consigne (M(SL)) comme demande de puissance au moyen d'un levier de conduite, dans lequel on détermine un couple d'entraînement réel (M(IST)) du véhicule ferroviaire (1), on calcule un écart de couple d'entraînement (dM) entre le couple d'entraînement de consigne (M(SL)) et le couple d'entraînement réel (M(IST)), dans lequel on détermine un mode d'entraînement prédictif (AAP) et on fixe en fonction de l'écart de couple d'entraînement (dM) et du mode d'entraînement prédictif (AAP) au moyen d'un gestionnaire de traction (9) un mode d'entraînement de consigne (AA(SL)) dans le sens d'un entraînement simple ou double, un point de fonctionnement de consigne (BP(SL)) ainsi qu'un niveau de réduction de consigne (US(SL)) pour les unités de réduction, **caractérisé en ce qu'**en régime établi on règle le moteur à combustion interne prévu pour la propulsion à un point de fonctionnement proche de la courbe de pleine charge et on règle l'autre moteur à combustion interne à un point de fonctionnement proche du nombre de tours du ralenti.

2. Procédé selon la revendication 1, **caractérisé en ce que** l'on enregistre un collectif de charge (15) des moteurs à combustion interne et on tient compte de façon significative du collectif de charge (15) lors de la fixation du mode d'entraînement de consigne (AA(SL)) et du point de fonctionnement de consigne (BP(SL)).

3. Procédé selon la revendication 2, **caractérisé en ce que** l'on tient compte du niveau de remplissage des carburants des moteurs lors de la fixation du mode d'entraînement de consigne (AA(SL)).

4. Procédé selon l'une quelconque des revendications précédentes, **caractérisé en ce que** l'on détermine le mode d'entraînement prédictif (AAP) **en ce qu'**on lit un plan de circulation électronique (SPL) sous forme de vitesses liées à des sections de circulation au moyen d'un appareil de commande du train (3A, 3B), on détermine à l'avance, avant la mise en circulation, des modes d'entraînement prédictifs (AAP) liés à des sections de circulation du véhicule ferroviaire (1) au moyen du plan de circulation électronique (SPL), on détermine en cours de circulation un écart de position (dPOS) entre la position réelle (POS(IST)) et une position de consigne (POS(SL)) du véhicule ferroviaire (1) définie par le plan de circulation électronique, à l'aide de l'écart de position (dPOS) on calcule une réserve de temps (tRES) et en fonction de la réserve de temps (tRES) on propose le maintien du mode d'entraînement prédictif (AAP) ou un changement du mode d'entraînement prédictif (AAP).

5. Procédé selon la revendication 4, **caractérisé en ce que**, dans le cas d'une réserve de temps négative (tRES) dans le sens d'un retard, on propose un mode d'entraînement prédictif (AAP) produisant une puissance plus élevée, dans le cas d'une réserve de temps (tRES) à l'intérieur d'une bande de tolérance on propose un maintien du mode d'entraînement prédictif actuel (AAP) et dans le cas d'une réserve de temps positive (tRES) dans le sens d'une arrivée prématurée on propose un mode d'entraînement prédictif (AAP) nécessitant une très faible consommation d'énergie.
